# EUROPÄISCHE PATENTSCHRIFT

(11) **EP 0 760 303 B1**
(45) Veröffentlichungstag und Bekanntmachung des Hinweises auf die Patenterteilung: **29.09.1999**
(21) Anmeldenummer: 96111998.9
(22) Anmeldetag: 25.07.1996
(51) Int. Cl.: B60J 7/12

(54) **Antriebseinrichtung für ein Verdeck und/oder einen Verdeckkastendeckel eines Kraftfahrzeuges**
Drive arrangement for hood and/or hood receptacle cover for motor vehicle
Dispositif d'entraînement pour capote et/ou couvercle de coffre de capote pour véhivule automobile

(30) Priorität: 04.09.1995 DE 19532568
(43) Veröffentlichungstag der Anmeldung: 05.03.1997
(73) Patentinhaber: Dr.Ing.h.c. F. Porsche Aktiengesellschaft, 70435 Stuttgart (DE)
(72) Erfinder: Beierl, Dominik, 70825 Korntal-Münchingen (DE); Luger, Martin, 71287 Weissach (DE)

(56) Entgegenhaltungen:
- FR-A- 777 528
- GB-A- 253 736
- US-A- 2 230 140
- US-A- 2 682 780

## Beschreibung

Die Erfindung bezieht sich auf eine Antriebseinrichtung für ein Verdeck und/oder einen Verdeckkastendeckei gemäß dem Oberbegriff des Patentanspruchs 1.

Bei der Montage der Antriebseinrichtung für ein Verdeck und/oder einen Verdeckkastendeckel eines Kraftfahrzeuges tritt die Problematik auf, daß große Einbau- und Fertigungstoleranzen ausgeglichen werden müssen.

Aufgabe der Erfindung ist es an einem Versteilgestänge für ein Verdeck und/oder einen Verdeckkastendeckel eines Kraftfahrzeuges solche Vorkehrungen zu treffen, daß einerseits relativ große Toleranzen ausgeglichen und daß andererseits konzeptbedingte Ausgleichshübe des Verstellgestänges kompensiert werden können.

Erfindungsgemäß wird diese Aufgabe durch die kennzeichnenden Merkmale des Anspruchs 1 gelöst. Weitere die Erfindung in vorteilhafter Weise ausgestaltende Merkmale enthalten die Unteransprüche.

Die mit der Erfindung hauptsächlich erzielten Vorteile sind darin zu sehen, daß durch die Anordnung eines Stellelementes im Versteilgestänge, welche an einem Ende ein Toleranzausgleichselement und am anderen Ende ein federunterstütztes und längenausgleichendes Zug-/Druckelement aufweist, sowohl relativ hohe Einbau-und Fertigungstoleranzen, als auch konzeptbedingte Ausgleichshübe kompensierbar sind. Das Stellelement weist einen einfachen Aufbau und eine gute Funktion auf.

Das im wesentlichen aus einer mit dem Gehäuse verbundenen Buchse und einem in die Buchse eingedrehten Zapfen bestehende Toleranzausgleichselement weist einen einfachen Aufbau auf. Einbau- und Fertigungstoleranzen können schnell und auf einfache Art ausgeglichen werden.

Das Zug-/Druckelement sorgt dafür, daß der Verdeckkastendeckel mit einer definierten Kraft nach unten in seine Schließstellung gezogen wird, wobei sich bei dieser Bewegung das Zug-/Druckelement längt.

Ein Ausführungsbeispiel der Erfindung ist in der Zeichnung näher erläutert,

Es zeigt
- Fig. 1: eine Seitenansicht eines Personenkraftwagens mit einem verdeck und einem Verdeckkastendeckei, jeweils in Schließstellung und eine Antriebseinrichtung für das Verdeck und den Verdeckkastendeckel,

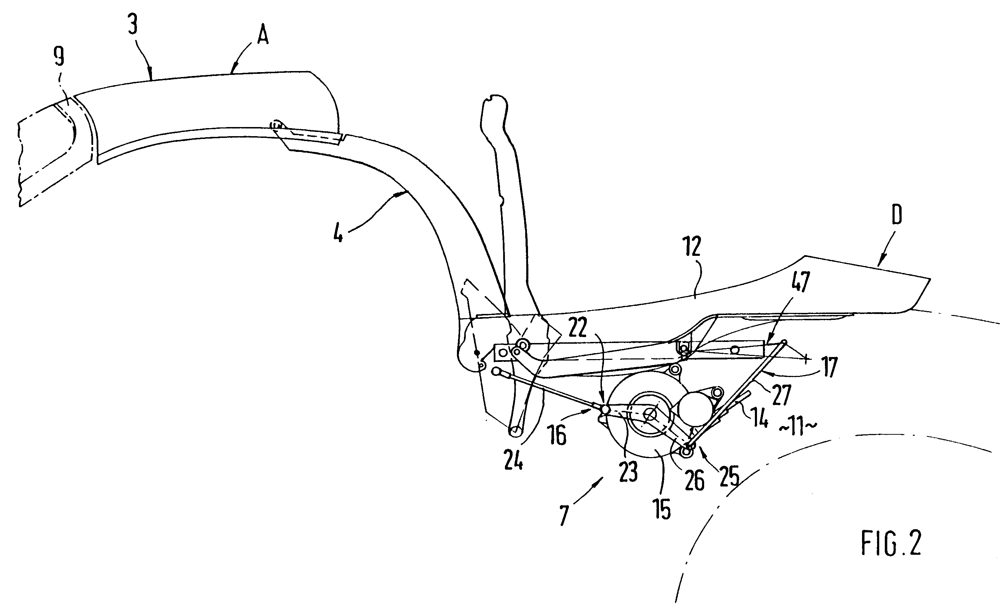

- Fig. 2: eine Teilseitenansicht in größerer Darsteilung des Verdecks in Schließsteilung, die Antriebseinrichtung una den Verdeckkastendeckei in Schließsteilung,

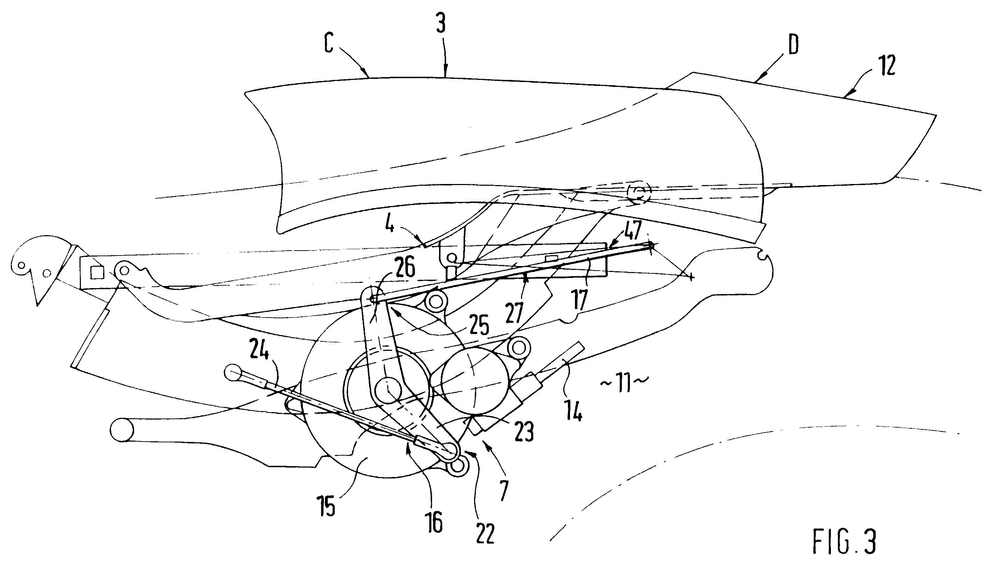

- Fig. 3: eine Teilseitenansicht in größerer Darsteilung auf das Verdeck in Ablagestellung und den Verdeckkastendeckel in Schließstellung und
- Fig. 4: eine Einzelheit X der Fig. 1 in vergrößerter Darstellung.

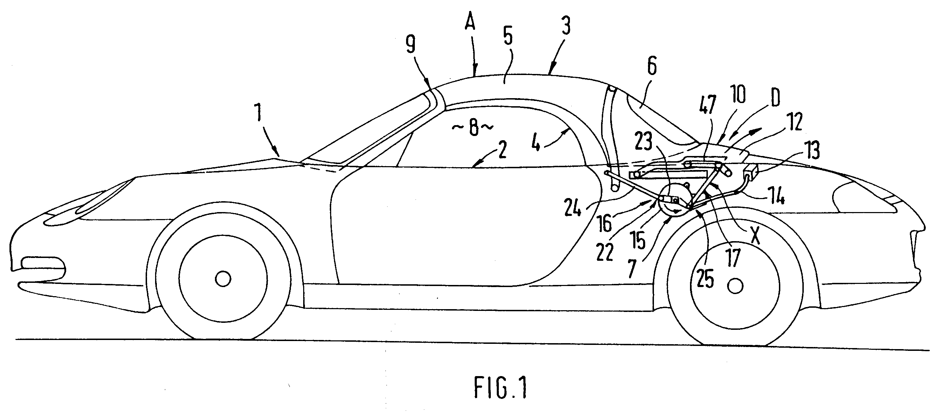

Fig. 1 zeigt einen durch ein Cabriolet gebildeten Personenkraftwagen 1, der oberhalb einer Gürtellinie 2 ein Verdeck 3 aufweist.
Im Ausführungsbeispiel wird das Verdeck 3 durch ein Falt- oder Klappverdeck gebildet das sich aus einem am Aufbau angelenkten schwenkbaren Verdeckgestell 4 und einem an diesem in Lage gehaltenen Verdeckbezug 5 zusammensetzt, im hinteren Bereich des Verdeckbezuges 5 st eine Sichtscheibe 6 angeordnet, die durch eine flexible oder starre Heckscheibe gebildet wird.
Das Verdeck 3 ist unter Vermittlung einer Antriebseinrichtung 7 von einer einen Fahrgastraum 8 überspannenden Schließsteilung A über Zwischenstellungen nach hinten in eine heckseitige Ablagestellung C verlagerbar, wobei der Öffnungs-bzw. Schließvorgang automatisch abläuft.
In der Schließstellung A erstreckt sich das Verdeck 3 von einem Windschutzscheibenrahmen 9 bis zu einem Heckbereich 10 und ist über zumindest eine nicht näher dargestellte lösbare Verriegelungsvorrichtung am Windschutzscheibenrahmen 9 in Lage gehalten.

In der Ablagestellung C ist das zusammengeklappte Verdeck 3 in einem heckseitigen Aufnahmeraum aufgenommen, der beiseieisweise durch einen Verdeckkasten 11 gebildet wird. Nach oben hin ist der Verdeckkasten 11 zumindest bereichsweise durch einen darüberliegenden Verdeckkastendeckel 12 abgedeckt.
Mitteis der Antriebseinrichtung 7 ist das Verdeck 3 zwischen der Schließstellung A und der Ablagestellung C und der Verdeckkastendeckei 12 zwischen einer Schließstellung D und einer nicht näher dargestellten Offenstellung bewegbar.

Die Antriebseinrichtung 7 für das Verdeck 3 und/oder den Verdeckkastendeckel 12 umfaßt einen elektrischen Antriebsmotor 13, der über biegsame Wellen 14 mit seitlich außenliegenden, aufbauseitig angebrachten Getriebeeinheiten 15 in Wirkverbindung steht. Jede Getriebeeinheit 15 ist über ein Verstellgestänge 16 mit dem Verdeck 3 und/oder dein Verdeckkastendeckel 12 verbunden.

Um einerseits relativ große Einbau- und Fertigungstoleranzen und andererseits konzeptbedingte Ausgleichshübe des Versteilgestänges 16 kompensieren zu können, ist erfindungsgemäß vorgesehen, daß das Verstellgestänge 16 zumindest ein Stellelement 17 umfaßt, welches an seinem einen Ende 18 ein Toleranzausgleichselement 19 aufweist und am anderen Ende 20 mit einem federunterstützenden und längenausgleichenden Zug-/Druckelement 21 versehen ist

Im Ausführungsbeispiel umfaßt jedes Verstellgestänge 16 einen ersten Kurbeltrieb 22, der mit dem Verdeckgestell 4 und der Getriebeeinheit 15 in Wirkverbindung steht und sich aus einem ersten Kurbelarm 23 und einer ersten Schubstange 24 zusammensetzt.
Ferner weist jedes Verstellgestänge 16 einen zweiten Kurbeltrieb 25 auf, der an den ersten Kurbeltrieb 22 und an den Verdeckkastendeckel 12 angeschlossen ist. Der zweite Kurbeltrieb 25 besteht aus dem zweiten Kurbelarm 26 und der zweiten Schubstange 27.

Im Ausführungsbeispiel bildet das Stellelement 17 die zweite Schubstange 27. Es besteht jedoch auch die Möglichkeit, daß das Stellelement 17 die erste Schubstange 24 oder einen anderen Lenker des Verstellgestänges 16 bildet.

Das Stellelement 17 umfaßt ein zylindrisches Gehäuse 28, in dem das Toleranzausgleichselement 19 und das Zug-/Druckelement 21 zumindest abschnittsweise aufgenommen sind.

Das Toleranzausgleichselement 19 besteht aus einer Buchse 29, die mit einem durchgehenden Innengewinde 30 versehen ist, wobei in die Buchse 29 ein Zapfen 31 eingedreht ist, der an seinem freien Ende 32 eine Kugelgelenkanordnung 33 aufweist.

Die Buchse 29 ragt mit einem zylindrischen Abschnitt 34 in das Gehäuse 28 hinein und ist vorzugsweise durch Verpressen oder dergleichen fest mit dem Gehäuse 28 verbunden. Ein vorstehender Bereich der Buchse 29 ist an seiner Außenseite als Mehrkant 35 ausgebildet, wobei der Mehrkant 35 eine Mutter bildet. Dem Mehrkant 35 vorgelagert ist auf das Außengewinde 36 des Zapfens 31 eine Kontermutter 37 aufgedreht, die mit dem Mehrkant 35 in Wirkverbindung steht.

Je nach Toleranzlage wird der Zapfen 31 unterschiedlich weit in das innengewinde 30 eingedreht und in der richtigen Position durch Verspannen der Kontermutter 37 mit dem Mehrkant 35 fixiert.
Auf einfache Weise können somit relativ große Einbau- und Fertigungstoleranzen ausgeglichen werden. Ein endseitiger Gewindezapfen 38 der Kugelgelenkanordnung 33 ist im Ausführungsbeispiel mit dem zweiten Kurbeiarm 26 des Verstellgestänges 16 verbunden.

Das Zug-/Druckelement 21 ragt mit einem Teilbereich seiner Längserstreckung in das Gehäuse 28 hinein und setzt sich im wesentlichen aus einer Stange 39 und einer Druckfeder 40 zusammen. Die Stange 39 weist einen zylindrischen Querschnitt auf und ist an ihrem vorstehenden freien Ende 41 mit einem abgeflachten Befestigungsauge 42 versehen.

Die innerhalb des Gehäuses 28 sich erstreckende Druckfeder 40 umgibt die Stange 39 koaxial und stützt sich einerseits an einer fest mit der Stange 39 verbundenen Sicherungsscheibe 43 und andererseits an einem gehäuseseitigen Gegenlager 44 ab.

Die unter Vorspannung stehende Druckfeder 40 bewegt das Zug/Druckelement 21 in Richtung Toleranzausgleichselement 19, wobei diese Bewegung durch einen außerhalb des Gehäuses 28 am Zug/Druckelement angebrachten Anschlag 45 begrenzt wird.

Zur Erzielung einer definierten Vorspannung der Druckfeder 40 ist zwischen der Außenseite des Gegenlagers 44 und dem Anschlag 45 eine Montagescheibe 46 eingesetzt, die beim Spannen der Druckfeder 40 bei Erreichen der definierten Vorspannung selbsttätig herausfällt.

Die definierte Vorspannung der Druckfeder 40 sorgt dafür, daß der Verdeckkastendeckel 12 mit einer definierten Kraft nach unten in seine Schließstellung D gezogen wird.

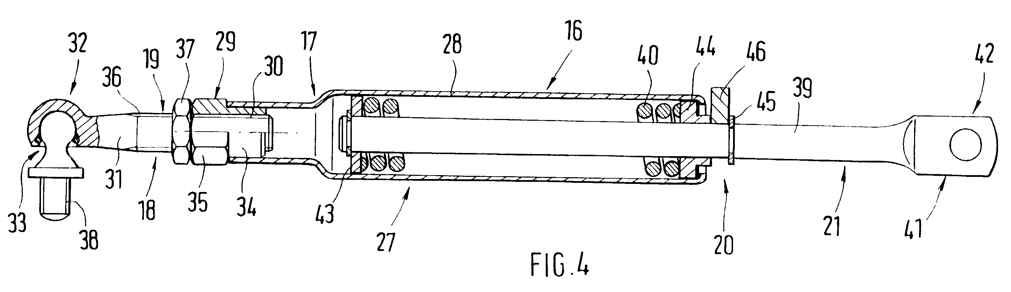

Das Stellelement 17 längt sich beim Zuziehen des Verdeckkastendeckels 12 um einen Weg S (nicht in Fig. 4 dargestellt).

Im Ausführungsbeispiel ist das Stellelement 17 einerseits mit dem zweiten Kurbelarm 27 des Verstellgestänges 16 und andererseits mit einem am Verdeckkastendeckei 12 angreifenden Lenkhebel 47 des Verstellgestänges 16 gelenkig verbunden.

Das Stellelement 17 könnte jedoch auch mit dem Verdeckgestänge 4 des Verdecks 3 in Wirkverbindung stehen.

## Patentansprüche

1. Antriebseinrichtung für ein Verdeck (3) und/oder Verdeckkastendeckei eines Kraftfahrzeugs (1), insbesondere Cabriolet, mit einem Verstellgestänge und einem Antriebsmotor (13), dadurch gekennzeichnet, daß das Versteilgestänge (16) zumindest ein Stellelement (17) umfaßt ist, das an seinem einen Ende (18) ein Toleranzausgleichselement (19) aufweist und daß am anderen Ende (20) des Stellelements (17) ein federunterstütztes und längenausgleichendes Zug-/Druckelement (21) vorgesehen ist.

2. Antriebseinrichtung nach Anspruch 1, dadurch gekennzeichnet, daß das Stellelement (17) ein zylindrisches Gehäuse (28) umfaßt, in dem das Toleranzausgleichselement (19) und das Zug/Druckelement (21) zumindest abschnittsweise aufgenommen sind.

3. Antriebseinrichtung nach den Ansprüchen 1 und 2, dadurch gekennzeichnet, daß an einem Ende des Gehäuses (28) eine mit diesem verbundene Buchse (29) mit einem Innengewinde (30) angeordnet ist, in das ein endseitiger mit einem Außengewinde (36) versehener Zapfen (31) des Toleranzausgleichselementes (19) eingedreht ist.

4. Antriebseinrichtung nach Anspruch 3, dadurch gekennzeichnet, daß die Buchse (29) abschnittsweise in das Gehäuse (28) hineinragt und dort vorzugsweise fest mit dem Gehäuse (28) verbunden ist und daß ein vorstehender Bereich der Buchse (29) an seiner Außenseite als Mehrkant (35) ausgebildet ist.

5. Antriebseinrichtung nach den Ansprüchen 3 und 5, dadurch gekennzeichnet, daß der eine Mutter bildende Mehrkant (35) mit einer vorgelagerten, auf das Außengewinde (36) des Zapfens (31) aufgedrehten Kontermutter (37) in Wirkverbindung steht.

6. Antriebseinrichtung nach den Anspruchen 1 und 2, dadurch gekennzeichnet, daß das Zug-/Druckelement (21) mit einem Teilbereich seiner Längserstreckung in das Gehäuse (28) hineinragt und daß eine das Zug-/Druckelement (21) koaxial umgebende Druckfeder (40) sich einerseits an einer fest mit dem Zug-/Druckelement (21) verbundenen Sicherungsscheibe (43) und andererseits an einem gehäuseseitigen Gegenlager (44) abstützt.

7. Antriebseinrichtung nach Anspruch 7, dadurch gekennzeichnet, daß die unter Vorspannung stehende Druckfeder (40) das Zug-/Druckelement (21) in Richtung Toleranzausgleichselement (19) bewegte wobei diese Bewegung durch einen außerhalb des Gehäuses (28) am Zug-/Druckelement (21) angebrachten Anschlag (45) begrenzte wird.

8. Antriebseinrichtung nach einem der vorangegangenen Ansprüche, dadurch gekennzeichnet, daß zur Erzielung einer definierten Vorspannung der Druckfeder (40) zwischen der Außenseite des Gegenlagers (44) und dem Anschlag (45) eine Montagescheibe (46) eingesetzt ist, die beim Spannen der Druckfeder bei Erreichen der definierten Vorspannung selbsttätig herausfällt.

9. Antriebseinrichtung nach einem oder mehreren der vorangegangenen Ansprüche, dadurch gekennzeichnet, daß das Stellelement (17) einerseits mit einem Kurbelarm (26) des Verstellgestänges (16) und andererseits mit einem am Verdeckkastendeckel (12) angreifenden Lenkhebel (47) des Verstellgestänges (16) gelenkig verbunden ist.

10. Antriebseinrichtung nach Anspruch 9, dadurch gekennzeichnet, daß durch das Stellelement (17) der Verdeckkastendeckel (12) mit einer definierten Kraft nach unten in eine Schließstellung D gezogen wird.

11. Antriebseinrichtung nach Anspruch 1, dadurch gekennzeichnet, daß das Stellelement (17) mit dem Verdeckgestänge (4) des Verdecks (3) in Wirkverbindung steht.

## Claims

1. A drive device for a folding top (3) and/or a lid of a folding-top compartment of a motor vehicle (1), in particular a cabriolet, with a displacement linkage and a drive motor (13), **characterized in that** the displacement linkage (16) [comprises] at least one adjustment member (17) provided at one end (18) thereof with a tolerance-compensating member (19), and a spring-supported and length-compensating push/pull member (21) is provided at the other end (20) of the adjustment member (17).

2. A drive device according to Claim 1, **characterized in that** the adjustment member (17) comprises a cylindrical housing (28) in which the tolerance-compensating member (19) and the push/pull member (21) are received at least in part.

3. A drive device according to Claims 1 and 2, **characterized in that** a bush (29) connected to the housing (28) and provided with an internal thread (30) is arranged at one end of the said housing (28), a pin (31) - provided with an external thread (36) - at the end of the tolerance-compensating member (19) being screwed into the said internal thread (30).

4. A drive device according to Claim 3, **characterized in that** the bush (29) projects in part into the housing (28) and is connected there, preferably in a rigid manner, to the housing (28), and a projecting area of the bush (29) is formed on the outside thereof as a polygon.

5. A drive device according to Claims 3 and 5, **characterized in that** the polygon (35), forming a nut, is operatively connected to a lock nut (37) positioned in front and screwed onto the external thread (36) of the pin (31).

6. A drive device according to Claims 1 and 2, **characterized in that** the push/pull member (21) projects with a partial area of the longitudinal extension thereof into the housing (28), and a compression spring (40) surrounding the push/pull member (21) coaxially is supported at one end on a refaining washer (43) connected rigidly to the push/pull member (21) and at the other end to a counter bearing (44) on the housing.

7. A drive device according to Claim 7 [*sic*], **characterized in that** the compression spring (40) under pre-stressing moves the push/pull member (21) in the direction of the tolerance-compensating member (19), wherein the said movement is limited by a stop (45) attached to the push/pull member (21) outside the housing (28).

8. A drive device according to one of the preceding Claims, **characterized in that** an assembly washer (46), which drops out automatically when a defined pre-stressing is achieved while stressing the compression spring (40), is used to achieve the defined prestressing of the compression spring (40) between the outside of the counter bearing (44) and the stop (45).

9. A drive device according to one or more of the preceding Claims, **characterized in that** the adjustment member (17) is connected in an articulated manner at one end to a crank arm (26) of the displacement linkage (16) and at the other end to a steering lever (47) of the displacement linkage (16) engaging on the lid (12) of the folding-top compartment.

10. A drive device according to Claim 9, **characterized in that** the lid (12) of the folding-top compartment is pulled downwards with a defined force into a closure position **D** by the adjustment member (17).

11. A drive device according to Claim 1, **characterized in that** the adjustment member (17) is operatively connected to the linkage (4) of the folding top (3).

## Revendications

1. Dispositif d'entraînement pour une capote (3) et/ou un couvercle de coffre de capote d'un véhicule automobile (1), notamment d'un cabriolet, comportant une tringlerie de réglage et un moteur d'entraînement (13), caractérisé en ce que la tringlerie de réglage (16) comprend au moins un élément de réglage (17) qui présente, à l'une de ses extrémités (18), un élément de compensation de tolérances (19) et en ce qu'à l'autre extrémité (20) de l'élément de réglage (17) est prévu un élément de traction/compression (21) soutenu par un ressort et compensant la longueur.

2. Dispositif d'entraînement selon la revendication 1, caractérisé en ce que l'élément de réglage (17) comprend un boîtier cylindrique (28), dans lequel l'élément de compensation de tolérances (19) et l'élément de traction/compression (21) sont logés au moins en partie.

3. Dispositif d'entraînement selon les revendications 1 et 2, caractérisé en ce qu'à une extrémité du boîtier (28) est disposée une douille (29) reliée à celle-ci et présentant un taraudage (30), dans lequel est vissée une tige (31), pourvue à une extrémité d'un filetage (36), de l'élément de compensation de tolérances (19).

4. Dispositif d'entraînement selon la revendication 3, caractérisé en ce que la douille (29) pénètre en partie dans le boîtier (28) et y est de préférence reliée fixement au boîtier (28) et en ce qu'une zone dépassante de la douille (29) est réalisée sur son côté extérieur sous la forme d'un polygone (35).

5. Dispositif d'entraînement selon les revendications 3 et 5, caractérisé en ce que le polygone (35) formant un écrou est en liaison active avec un contre-écrou (37) placé devant, vissé sur le filetage (36) de la tige (31).

6. Dispositif d'entraînement selon les revendications 1 et 2, caractérisé en ce que l'élément de traction/compression (21) s'engage par une zone partielle de son extension longitudinale dans le boîtier (28) et en ce qu'un ressort de compression (40), entourant coaxialement l'élément de traction/compression (21) prend appui d'une part contre un disque de sureté (43) solidaire de l'élément de traction/compression (21) et d'autre part, contre un contre-palier (44) côté boîtier.

7. Dispositif d'entraînement selon la revendication 7, caractérisé en ce que le ressort de compression (40) se trouvant sous précontrainte déplace l'élément de traction/compression (21) dans la direction de l'élément de compensation de tolérances (19), ce mouvement étant limité par une butée (45) montée à l'extérieur du boîtier (28) sur l'élément de traction/compression (21).

8. Dispositif d'entraînement selon l'une des revendications précédentes, caractérisé en ce que pour obtenir une précontrainte définie du ressort de compression (40), entre le côté extérieur du contre-palier (44) et la butée (45) est inséré un disque de montage (46), qui tombe automatiquement à l'extérieur lors de la tension du ressort de compression, lorsqu'est atteinte la précontrainte définie.

9. Dispositif d'entraînement selon une ou plusieurs des revendications précédentes, caractérisé en ce que l'élément de réglage (17) est relié de manière articulée d'une part à un bras de manivelle (26) de la tringlerie de réglage (16) et d'autre part à un levier articulé (47), agissant sur le couvercle (12) du coffre de capote, de la tringlerie de réglage (16).

10. Dispositif d'entraînement selon la revendication 9, caractérisé en ce que le couvercle (12) du coffre de capote est tiré vers le bas dans une position de fermeture (D), par l'élément de réglage (17) avec une force définie.

11. Dispositif d'entraînement selon la revendication 1, caractérisé en ce que l'élément de réglage (17) est en liaison active avec la tringlerie (4) de la capote.
